# EUROPÄISCHE PATENTSCHRIFT

(11) **EP 4 302 064 B1**
(45) Veröffentlichungstag und Bekanntmachung des Hinweises auf die Patenterteilung: **19.06.2024**
(21) Anmeldenummer: 22710948.5
(22) Anmeldetag: 03.03.2022
(51) Int. Cl.: G01M 13/02, F16P 1/02, F16C 1/26, F16L 57/00, G01B 7/00, G01M 13/025

(54) **VERFAHREN UND VORRICHTUNG ZUR ÜBERWACHUNG DER POSITION EINER WELLE**
METHOD AND DEVICE FOR MONITORING THE POSITION OF A SHAFT
PROCÉDÉ ET DISPOSITIF DE SURVEILLANCE DE LA POSITION D'UN ARBRE

(30) Priorität: 04.03.2021 AT 501552021
(43) Veröffentlichungstag der Anmeldung: 10.01.2024
(73) Patentinhaber: Kristl, Seibt & Co. Gesellschaft M.B.H., 8052 Graz (AT)
(72) Erfinder: AUER, Christian, 8020 Graz (AT)
(74) Vertreter: SONN Patentanwälte GmbH & Co KG
(86) Internationale Anmeldenummer: PCT/AT2022/060061
(87) Internationale Veröffentlichungsnummer: WO 2022/183232

(56) Entgegenhaltungen:
- EP-A1- 3 447 318
- CN-U- 208 333 871
- DE-C1- 10 038 767
- US-A- 5 412 999

## Beschreibung

Die Erfindung betrifft Verfahren zur Überwachung der Position einer Welle eines Prüfstandes, wobei die Welle in einer Umhausung aufgenommen ist, welche die Welle in Umfangsrichtung zumindest abschnittsweise im Wesentlichen umschließt, wobei die Umhausung eine der Welle zugewandte innere Fläche aufweist und in einer bestimmungsgemäßen Position der Welle die innere Fläche berührungsfrei zu der Welle angeordnet ist.

Weiters betrifft die Erfindung eine Vorrichtung zum Schutz vor Berührungen einer Welle eines Prüfstandes mit einer Umhausung, die zur zumindest abschnittsweisen Aufnahme der Welle vorgesehen ist, wobei die Umhausung in Umfangsrichtung im Wesentlichen geschlossen ist und eine der Welle zugewandte innere Fläche aufweist, die eingerichtet ist in einer bestimmungsgemäßen Position der Welle berührungsfrei zu der Welle angeordnet zu sein.

An Prüfständen mit drehenden Teilen wird beispielsweise eine zu prüfende Antriebsmaschine oder ein Antriebsstrang, auch als Prüfling bezeichnet, mit einer oder mehreren Belastungsmaschinen über Wellen verbunden. Als Wellen kommen beispielsweise Kreuzgelenkwellen oder Gleichlaufgelenk-wellen zum Einsatz. Aus Sicherheitsgründen werden diese Wellen mit einer Umhausung, oftmals auch als Wellenschutz oder Berührschutz bezeichnet, versehen. Die Umhausung verhindert ein unbeabsichtigtes Berühren der sich drehenden Welle und kann im Falle eines Bruchs der Welle dazu beitragen, Beschädigungen am Prüfstand und dem Prüfling zu minimieren. Des Weiteren kann die Umhausung im Zuge von Umbauarbeiten am Prüfstand als Ablageort für die Welle dienen.

Aus dem Stand der Technik, beispielsweise der EP 2 230 438 B1, ist ein solcher Berührschutz bekannt. Der Berührschutz der EP 2 230 438 B1 ist mehrteilig aufgebaut und kann an unterschiedlich geformte Wellen angepasst werden. Es sind Schutzbarrieren im Berührschutz vorgesehen, die im Falle eines Bruchs der Welle die Bruchstücke einfangen und somit weitere schwere Beschädigungen am Prüfstand verhindern.

Eine Fehlausrichtung der Welle sollte frühzeitig erkannt werden, um einer Beschädigung, wie beispielsweise einem Bruch der Welle, vorbeugen zu können. Beispielsweise kann ein Bruch der Prüflingsaufhängung zu einer Fehlausrichtung der Welle führen. Schleift die Welle über längere Zeit an der Umhausung, besteht die Gefahr der Schädigung der Welle und der Umhausung, des Prüflings und des Prüfstands sowie die Gefahr eines Brandes. Da es sich um keinen Wellenbruch handelt, kann dieser Fehler aber nicht durch eine Differenzdrehzahl-Überwachung festgestellt werden.

Aus der CN 208 333 871 U ist bereits ein Berührschutz für Wellen an Prüfständen mit einer Überwachungseinrichtung bekannt. Zur Überwachung der Ausrichtung der Welle ist mindestens ein Abstandssensor vorgesehen, der einerseits einen Abstand der Welle zu einem Motor und andererseits eine radiale Position der Welle im Berührschutz misst. Der Abstandssensor kann beispielsweise ein Infrarotsensor oder ein Lasersensor sein.

Die EP 3 447 318 A1 zeigt eine Vorrichtung zur Überwachung einer Gleitlagervorrichtung. Die Gleitlagervorrichtung weist ein statisches Element und ein bewegliches Element auf. Das beweglcihe Element weist eine Vorrichtung zur Generierung eines Magnetfeldes auf. Das statische Element weist eine Sensorvorrichtung zur Erfassung des Magnetfeldes auf. Das zeitlich variierende Magnetfeld kann als Maß für die Position der Welle herangezogen werden.

Aus der DE 10 038 767 ist ein magnetorestriktiver Drehmomentfüßler zur Messung der Torsion von belasteten Wellen bekannt. In einem ringförmigen magnetischen Joch sind eine Erregerspule und zwei getrennte Messspulen angeordnet. Dabei bildet die Erregerspule zusammen mit den beiden Messspulen eine Spulenanordnung zur Erzeugung eines magnetischen Messfeldes, welches vom magnetischen Joch in die zu messende Welle eingekoppelt wird. Dabei durchsetzt das Messfeld auch die Welle, wobei sich durch den magnetostriktiven Effekt die magnetische Induktion mit der Veränderung des Belastungszustandes der Welle ändert. Mittels zwei Messspulen wird das in die Welle induzierte magnetische Feld gemessen, das somit als Maß für die Torsion der Welle herangezogen werden kann.

Die US 5 412 999 A1 eine Vorrichtung zur Überwachung von Positions- und Drehmomentveränderungen in einem Drehmoment-tragenden Element wie einer Welle durch Verwendung eines magnetostriktiven Sensors. Die Welle weist Rillen auf, welche dazu führen, dass der magnetische Fluss mit der Drehposition der Welle variiert, womit wiederum eine Überwachung von Drehmoment und Position der Welle ermöglicht wird. Es ist weiters ein Sensorkopf vorgesehen, der eine Spule aufweist.

Die aus dem Stand der Technik bekannten Verfahren bedürfen jeweils vergleichsweise komplexer und damit fehleranfälliger Sensorik zum Erfassen kontinuierlicher Zustandsparameter von Wellen. Ein Prüfstand stellt unter anderem aufgrund von mechanischen Belastungen, beispielsweise ausgelöst durch Vibrationen im Betrieb der Welle, und aufgrund der häufigen Umbauarbeiten ein sehr forderndes Umfeld für Sensorik aller Art dar.

Es ist Aufgabe der Erfindung die Nachteile aus dem Stand der Technik zu lindern bzw. gänzlich zu beseitigen. Insbesondere ist es Aufgabe der Erfindung, eine Fehlausrichtung der Welle frühzeitig und mit einfachen Mitteln zu erkennen, um eine Beschädigung des Prüfstands und eine Gefahr für Menschen abwenden zu können.

Gelöst wird diese Aufgabe durch ein Verfahren der eingangs angeführten Art, wobei mindestens eine Leiterschleife an der inneren Fläche der Umhausung angeordnet ist und ein durch die Leiterschleife transmittiertes elektrisches Signal, vorzugsweise ein Ruhestrom, zur Ermittlung einer allfälligen Durchtrennung der Leiterschleife gemessen wird. Es kann somit insbesondere eine Fehlausrichtung der Welle und ein daraus resultierendes Schleifen der Welle an der Umhausung erkannt werden, bevor es zu schweren Beschädigungen am Prüfstand und zu einer Gefährdung von Menschen kommt. Bei einer Falschausrichtung der Welle wird eine Leiterschleife von der Welle durchtrennt und damit ein durch die Leiterschleife transmittiertes elektrisches Signal unterbrochen.

Das elektrische Signal dient der Zustandsüberwachung der Welle. Eine Unterbrechung des Signals ist somit ein Indiz für eine falsch ausgerichtete Welle.

Um eine Falschausrichtung an unterschiedlichen Positionen innerhalb der Umhausung feststellen zu können, ist bei einer bevorzugten Ausführungsform vorgesehen, dass das elektrische Signal in zumindest zwei in Achsrichtung der Welle voneinander beabstandet angeordneten Leiterschleifen gemessen wird.

Vorteilhafter Weise wird bei Ermittlung der Durchtrennung einer Leiterschleife ein Signal abgegeben. Das Signal kann beispielsweise ein akustisches, optisches oder ein elektrisches Signal sein. Dieses Signal kann in Folge zu weiteren Maßnahmen wie beispielsweise einer Notabschaltung oder einem Alarm führen. Die Durchtrennung einer Leiterschleife und die Unterbrechung des durch die Leiterschleife transmittierten elektrischen Signals kann auch direkt zu einer Maßnahme wie einer Notabschaltung oder einem Alarm führen.

Die erfindungsgemäße Aufgabe wird auch durch eine Vorrichtung der eingangs angeführten Art gelöst, bei welcher an der inneren Fläche der Umhausung mindestens eine Leiterschleife angeordnet ist, wobei die Leiterschleife bzw. jede Leiterschleife mit einer Messeinrichtung verbunden ist, die jeweils dazu eingerichtet ist, ein durch die Leiterschleife transmittiertes elektrisches Signal, vorzugsweise einen Ruhestrom, zu bewirken und eine Unterbrechung des elektrischen Signals zu erfassen.

Wie schon vorstehend im Zusammenhang mit dem erfindungsgemäßen Verfahren erläutert, kann auch mit der erfindungsgemäßen Vorrichtung auf einfache Weise eine Fehlausrichtung der Welle detektiert werden. Sofern die Welle aufgrund ihrer Fehlausrichtung an der Leiterschleife anliegt, wird die Leiterschleife von der Welle durchtrennt und damit ein durch die Leiterschleife transmittiertes elektrisches Signal unterbrochen. Als Messeinrichtung ist beispielsweise ein entsprechend konfigurierter Mikrocontroller oder auch eine Multimeter geeignet.

In einer bevorzugten Ausführungsform ist die Leiterschleife in oder an einer Folienplatine ausgebildet. Dies ermöglicht eine kostengünstige und sehr reproduzierbare Herstellung der Leiterschleife, führt zu einer großen Flexibilität der Leiterschleife und somit zu einer einfachen Montage, und schützt die Leiterschleife vor unbeabsichtigter bzw. nicht durch eine Fehlausrichtung der Welle verursachten Beschädigung bzw. Durchtrennung.

In einer weiteren bevorzugten Ausführungsform weist die Folienplatine mehrere Leiterschleifen, vorzugsweise genau zwei Leiterschleifen, auf. Durch die Ausbildung von zumindest zwei Leiterschleifen, wird vorteilhafterweise eine gewisse Redundanz erzielt. Die Überwachung von mehreren Leiterschleifen führt zu einer höheren Sensitivität in der Erfassung einer Fehlausrichtung.

Vorzugsweise ist die Umhausung aus einer oberen Halbschale und einer unteren Halbschale zusammengesetzt, wobei vorzugsweise die obere Halbschale auf der unteren Halbschale schwenkbar gelagert ist. Diese Ausführung ermöglicht ein besonders einfaches Einbringen der Welle in die Umhausung. Während des Einbringens und der Montage der Welle ist die Umhausung aufgeklappt, die obere Halbschale ist dabei von der unteren weg geschwenkt. Im Betrieb der Welle ist die obere Halbschale auf die unter Halbschale geschwenkt und die Umhausung geeignet verriegelt. Es kann zusätzlich ein Schutzschalter vorgesehen sein, der einen Betrieb der Welle und des Prüfstands nur bei geschlossener und verriegelter Umhausung zulässt.

Um zumindest in einem Teilbereich des halben Umfangs eine Berührung der Welle an der inneren Fläche der Umhausung feststellen zu können, ist es vorteilhaft, dass an der inneren Fläche der oberen Halbschale und an der inneren Fläche der unteren Halbschale zumindest eine Leiterschleife angeordnet ist. Eine Erhöhung der Anzahl der Leiterschleifen an der inneren Fläche führt zu einer erhöhten Zuverlässigkeit in der Erkennung einer Fehlausrichtung der Welle.

Bevorzugt sind zwei vorzugsweise im Wesentlichen diametral angeordnete Leiterschleifen in Richtung der Achse der Welle gesehen auf im Wesentlichen der gleichen Höhe angeordnet. Damit kann die Wahrscheinlichkeit der Erfassung einer Fehlausrichtung der Welle in eine Richtung erhöht werden.

In einer bevorzugten Ausführungsform sind zumindest zwei Leiterschleifen derart angeordnet, dass die innere Fläche in zumindest einem Abschnitt im Wesentlichen über den gesamten Umfang von Leiterschleifen bedeckt ist. Dadurch kann eine Fehlausrichtung der Welle unabhängig von der Richtung der Verschiebung oder der Neigung der Welle relativ zu ihrer bestimmungsgemäßen Position erfasst werden.

In einer weiteren bevorzugten Ausführungsform ist in Richtung der Achse der Welle gesehen angrenzend an zumindest ein Ende der Umhausung, vorzugweise an beiden Enden, eine Leiterschleife angeordnet. Durch die Anordnung mehrerer Leiterschleifen verteilt über die innere Fläche der Umhausung ist eine Fehlausrichtung unabhängig von der Richtung der Verschiebung oder der Neigung der Welle erkennbar. Die Anordnung von Leiterschleifen an einem oder an beiden Enden der Umhausung ist besonders vorteilhaft, da eine durch eine Neigung der Welle hervorgerufene radiale Verschiebung an den Enden der Welle und in Folge auch an den Enden der Umhausung am stärksten ausgeprägt ist. Somit ist eine Neigung der Welle relativ zu ihrer bestimmungsgemäßen Position typischerweise zuerst an den Enden der Umhausung feststellbar.

Vorzugsweise ist die innere Fläche an einer inneren Auskleidung ausgebildet, welche in einem äußeren Mantel der Umhausung aufgenommen ist. Die innere Auskleidung kann so ausgeführt sein, dass im Falle eines Wellenbruchs die Drehachse der Wellenteile bis zum Stillstand in der bestimmungsgemäßen Richtung gehalten werden kann. Die innere Auskleidung kann somit schwere Beschädigungen des Prüfstands verhindern.

Im Folgenden wird die Erfindung an Hand von Figuren näher erläutert, auf die sie allerdings nicht beschränkt sein soll. Es zeigen:
Fig. 1 eine Umhausung für eine Welle an Prüfständen, ausgestattet mit Leiterschleifen;
Fig. 1a die Umhausung gemäß Fig. 1 mit einer darin aufgenommenen Welle;
Fig. 2 eine Leiterschleife in oder an einer Folienplatine;
Fig. 3 eine Folienplatine mit zwei Leiterschleifen.

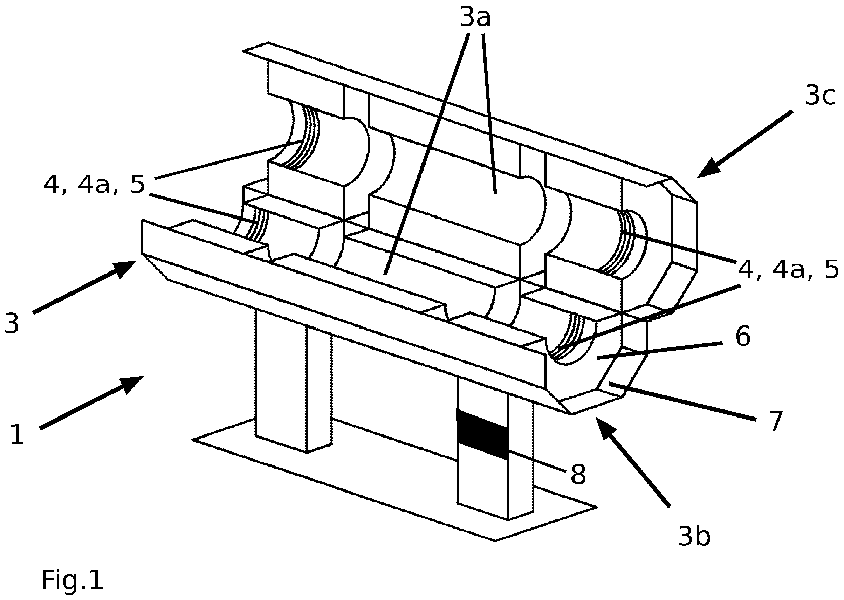

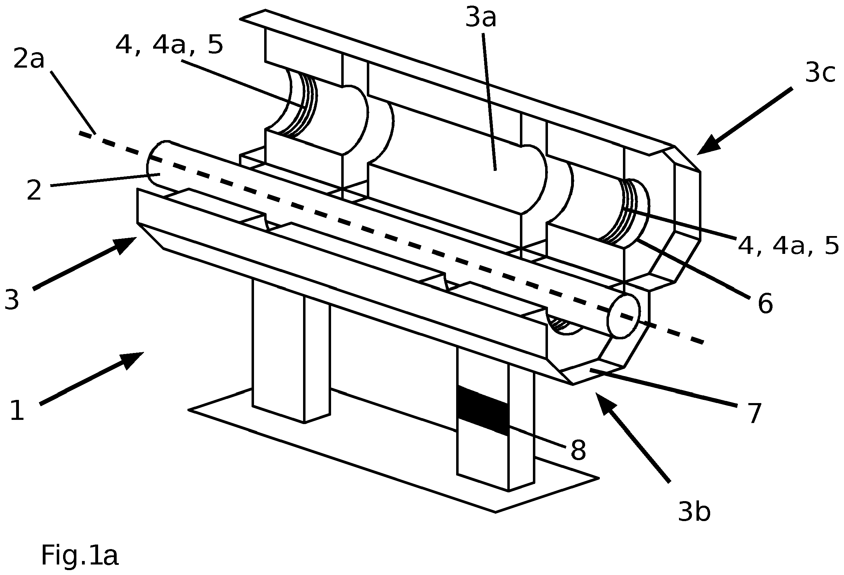

Figuren 1 und 1a zeigen eine schematische Darstellung einer Vorrichtung 1 zum Schutz vor Berührungen einer Welle 2 eines Prüfstandes mit einer Umhausung 3, die zur zumindest abschnittsweisen Aufnahme der Welle 2 vorgesehen ist, wobei die Umhausung 3 in Umfangsrichtung im Wesentlichen geschlossen ist. Die Umhausung 3 weist eine der Welle zugewandte innere Fläche 3a auf, die in einer bestimmungsgemäßen Position der Welle 2 berührungsfrei zu der Welle angeordnet ist. An der inneren Fläche 3a ist mindestens eine Leiterschleife 4 angeordnet. Die Umhausung 3 ist aus einer unteren Halbschale 3b und einer oberen Halbschale 3c zusammengesetzt, wobei die obere Halbschale 3c auf der unteren Halbschale 3b schwenkbar gelagert ist.

In den Figuren 1 und 1a ist die Umhausung 3 im aufgeklappten Zustand zu sehen. Im Betrieb der Welle ist die obere Halbschale 3c herab geschwenkt und liegt auf der unteren Halbschale 3b auf, um eine die Welle im Wesentlichen umschließende Umhausung 3 zu bilden. An der inneren Fläche 3a der oberen Halbschale 3c und an der inneren Fläche 3a der unteren Halbschale 3b sind jeweils zwei Leiterschleifen 4, vorzugsweise in oder an Folienplatinen 4a angeordnet. Dabei bedecken die Leiterschleifen 4 die innere Fläche 3a im Wesentlichen über den gesamten Umfang der Umhausung 3. Dadurch kann eine Fehlausrichtung der Welle 2 unabhängig von der Richtung der Verschiebung oder der Neigung der Welle 2 relativ zu ihrer bestimmungsgemäßen Position erkannt werden.

Des Weiteren sind die Leiterschleifen 4 in Richtung der Achse 2a der Welle 2 gesehen angrenzend an die beiden Enden 5 der Umhausung 3 angeordnet. Diese Anordnung ist besonders sensitiv in der Erkennung einer Neigung der Welle 2 relativ zu ihrer bestimmungsgemäßen Position, da eine Neigung an den Enden 5 der Umhausung 3 die größte radiale Verschiebung des entsprechenden Abschnitts der Welle 2 bewirkt.

Die innere Fläche 3a ist dabei an einer inneren Auskleidung 6 ausgebildet, welche in einem äußeren Mantel 7 aufgenommen ist. Jede Leiterschleife 4 ist mit einer Messeinrichtung 8 verbunden, die dazu eingerichtet ist, ein durch die Leiterschleife 4 transmittiertes elektrisches Signal, vorzugsweise einen Ruhestrom, zu bewirken und eine Unterbrechung des elektrischen Signals zu erfassen. Kommt es im Betrieb der Welle 2 zu einer Fehlausrichtung der Welle 2, so beschädigt bzw. durchtrennt die Welle 2 eine oder mehrere Leiterschleifen 4. Dies führt zu einer Unterbrechung des elektrischen Signals, welche erkannt wird. In Folge kann es zu einem Signal, wie beispielsweise einem optischen, akustischen oder elektrischen Signal, kommen und weitere Maßnahmen, beispielsweise ein Alarm oder eine Notabschaltung des Prüfstandes, können eingeleitet werden.

Figur 1a zeigt die Umhausung gemäß Figur 1 mit einer darin aufgenommenen Welle 2. Die Welle 2 befindet sich in Ihrer bestimmungsgemäßen Position und ist kontaktfrei zu der inneren Fläche 3a angeordnet.

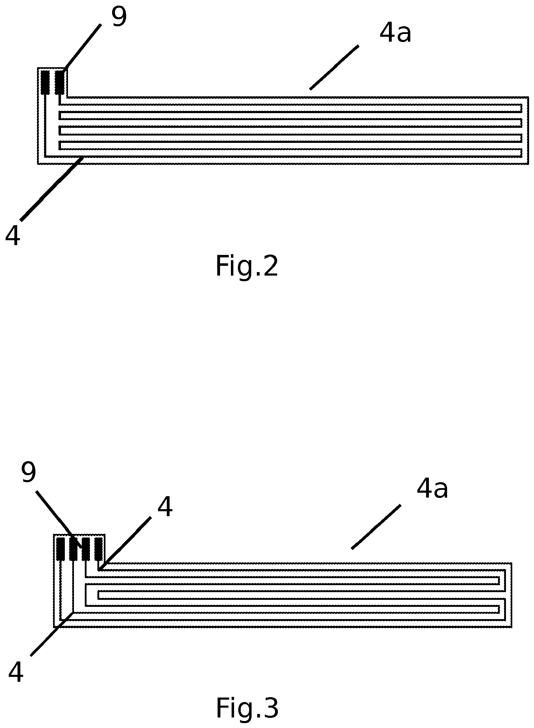

Figur 2 zeigt eine Leiterschleife 4, die in oder an einer Folienplatine 4a ausgebildet ist. Es sind Anschlüsse 9 vorgesehen, mit denen die Leiterschleife 4 kontaktiert werden kann. Wird die Leiterschleife 4 von einer fehlerhaft ausgerichteten Welle 2 durchtrennt, wird ein Stromkreis unterbrochen und die Leiterschleife 4 ist nicht mehr in der Lage ein elektrisches Signal zu transmittieren.

Figur 3 zeigt eine Folienplatine 4a mit zwei Leiterschleifen 4. Es sind für jede der Leiterschleifen 4 je zwei Anschlüsse 9 zur Kontaktierung vorgesehen. Es können beiden Leiterschleifen 4 zur Überwachung verwendet werden. Die Überwachung beider Leiterschleifen führt zu einer höheren Sensitivität in der Erfassung einer Fehlausrichtung.

## Patentansprüche

1. Verfahren zur Überwachung der Position einer Welle (2) eines Prüfstandes, wobei die Welle (2) in einer Umhausung (3) aufgenommen ist, welche die Welle (2) in Umfangsrichtung zumindest abschnittsweise im Wesentlichen umschließt, wobei die Umhausung (3) eine der Welle (2) zugewandte innere Fläche (3a) aufweist und in einer bestimmungsgemäßen Position der Welle (2) die innere Fläche (3a) berührungsfrei zu der Welle (2) angeordnet ist, **dadurch gekennzeichnet, dass** mindestens eine Leiterschleife (4) an der inneren Fläche (3a) angeordnet ist und ein durch die Leiterschleife (4) transmittiertes elektrisches Signal, vorzugsweise ein Ruhestrom, zur Ermittlung einer allfälligen Durchtrennung der Leiterschleife (4) gemessen wird.

2. Verfahren nach Anspruch 1, **dadurch gekennzeichnet, dass** das elektrische Signal in zumindest zwei in Achsrichtung der Welle (2a) voneinander beabstandet angeordneten Leiterschleifen (4) gemessen wird.

3. Verfahren nach Anspruch 1 oder 2, **dadurch gekennzeichnet, dass** bei Ermittlung der Durchtrennung einer Leiterschleife (4) ein Signal abgegeben wird.

4. Vorrichtung (1) zum Schutz vor Berührungen einer Welle (2) eines Prüfstand mit einer Umhausung (3), die zur zumindest abschnittsweisen Aufnahme der Welle (2) vorgesehen ist, wobei die Umhausung (3) in Umfangsrichtung im Wesentlichen geschlossen ist und eine der Welle (2) zugewandte innere Fläche (3a) aufweist, die eingerichtet ist in einer bestimmungsgemäßen Position der Welle (2) berührungsfrei zu der Welle (2) angeordnet zu sein, **dadurch gekennzeichnet, dass** an der inneren Fläche (3a) mindestens eine Leiterschleife (4) angeordnet ist, wobei die Leiterschleife (4) bzw. jede Leiterschleife (4) mit einer Messeinrichtung (8) verbunden ist, die jeweils dazu eingerichtet ist, ein durch die Leiterschleife (4) transmittiertes elektrisches Signal, vorzugsweise einen Ruhestrom, zu bewirken und eine Unterbrechung des elektrischen Signals zu erfassen.

5. Vorrichtung (1) nach Anspruch 4, **dadurch gekennzeichnet, dass** die Leiterschleife (4) in oder an einer Folienplatine (4a) ausgebildet ist.

6. Vorrichtung (1) nach Anspruch 5, **dadurch gekennzeichnet, dass** die Folienplatine (4a) mehrere Leiterschleifen (4), vorzugsweise genau zwei Leiterschleifen (4), aufweist.

7. Vorrichtung (1) nach einem der Ansprüche 4 bis 6, **dadurch gekennzeichnet, dass** die Umhausung (3) aus einer oberen Halbschale (3c) und einer unteren Halbschale (3b) zusammengesetzt ist, wobei vorzugsweise die obere Halbschale (3c) auf der unteren Halbschale (3b) schwenkbar gelagert ist.

8. Vorrichtung (1) nach Anspruch 7, **dadurch gekennzeichnet, dass** an der der inneren Fläche (3a) der oberen Halbschale (3c) und an der inneren Fläche (3a) der unteren Halbschale (3b) zumindest eine Leiterschleife (4) angeordnet ist.

9. Vorrichtung (1) nach einem der Ansprüche 4 bis 8, **dadurch gekennzeichnet, dass** zumindest zwei vorzugsweise im Wesentlichen diametral angeordnete Leiterschleifen (4) in Richtung der Achse (2a) der Welle (2) gesehen auf im Wesentlichen der gleichen Höhe angeordnet sind.

10. Vorrichtung (1) nach einem der Ansprüche 4 bis 9, **dadurch gekennzeichnet, dass** zumindest zwei Leiterschleifen (4) derart angeordnet sind, dass die innere Fläche (3a) in zumindest einem Abschnitt im Wesentlichen über den gesamten Umfang von Leiterschleifen (4) bedeckt ist.

11. Vorrichtung (1) nach einem der Ansprüche 4 bis 10, **dadurch gekennzeichnet, dass** in Richtung der Achse (2a) der Welle (2) gesehen angrenzend an zumindest ein Ende (5) der Umhausung (3), vorzugweise an beiden Enden (5), eine Leiterschleife (4) angeordnet ist.

12. Vorrichtung (1) nach einem der Ansprüche 4 bis 11, **dadurch gekennzeichnet, dass** die innere Fläche (3a) an einer inneren Auskleidung (6) ausgebildet ist, welche in einem äußeren Mantel (7) der Umhausung (1) aufgenommen ist.

## Claims

1. Method for monitoring the position of a shaft (2) of a test bench, wherein the shaft (2) is accommodated in an enclosure (3), which substantially surrounds at least part of the shaft (2) in the circumferential direction, wherein the enclosure (3) comprises an inner surface (3a) facing the shaft (2) and, in an intended position of the shaft (2), the inner surface (3a) is arranged in a contactless manner relative to the shaft (2), **characterised in that**, at least one conductor loop (4) is arranged on the inner surface (3a), and an electrical signal transmitted through the conductor loop (4), preferably a closed-circuit current, is measured to determine any severance of the conductor loop (4).

2. Method according to claim 1, **characterised in that**, the electrical signal is measured in at least two conductor loops (4), arranged at a distance from each other in the axial direction of the shaft (2a).

3. Method according to claim 1 or 2, **characterised in that**, a signal is emitted when the severance of a conductor loop (4) is detected.

4. Device (1) for the protection of a shaft (2) of a test bench from contact with an enclosure (3), which is provided for the accommodation of at least part of the shaft (2), wherein the enclosure (3) is substantially closed in the circumferential direction and comprises an inner surface (3a) facing the shaft (2), which inner surface (3a) is set up to be arranged in a contactless manner relative to the shaft (2) in an intended position of the shaft (2), **characterised in that**, at least one conductor loop (4) is arranged on the inner surface (3a), wherein the conductor loop (4), respectively each conductor loop (4), is coupled to a measuring device (8), which in each case is set up to cause an electrical signal, preferably a closed-circuit current, to be transmitted through the conductor loop (4), and to detect an interruption of the electrical signal.

5. Device (1) according to claim 4, **characterised in that**, the conductor loop (4) is formed in or on a printed circuit board foil (4a) .

6. Device (1) according to claim 5, **characterised in that**, the printed circuit board foil (4a) comprises a plurality of conductor loops (4), preferably precisely two conductor loops (4).

7. Device (1) according to one of the claims 4 to 6, **characterised in that**, the enclosure (3) is composed of an upper half-shell (3c) and a lower half-shell (3b), wherein the upper half-shell (3c) is preferably pivotably mounted on the lower half-shell (3b).

8. Device (1) according to claim 7, **characterised in that**, at least one conductor loop (4) is arranged on the inner surface (3a) of the upper half-shell (3c), and at least one conductor loop (4) is arranged on the inner surface (3a) of the lower half-shell (3b).

9. Device (1) according to one of the claims 4 to 8, **characterised in that**, at least two preferably substantially diametrically arranged conductor loops (4) are arranged at substantially the same height, as viewed in the direction of the axis (2a) of the shaft (2) .

10. Device (1) according to one of the claims 4 to 9, **characterised in that**, at least two conductor loops (4) are arranged in such a way that at least one section of the inner surface (3a) is substantially covered over the entire circumference by conductor loops (4).

11. Device (1) according to one of the claims 4 to 10, **characterised in that**, a conductor loop (4) is arranged adjacent to at least one end (5) of the enclosure (3), preferably adjacent to both ends (5), as viewed in the direction of the axis (2a) of the shaft (2).

12. Device (1) according to one of the claims 4 to 11, **characterised in that**, the inner surface (3a) is formed on an inner cladding (6), which is accommodated in an outer jacket (7) of the enclosure (1).

## Revendications

1. Procédé de surveillance de la position d'un arbre (2) d'un banc d'essai, où l'arbre (2) est logé dans une enceinte (3) qui entoure essentiellement l'arbre (2) dans la direction circonférentielle au moins par sections, où l'enceinte (3) présente une surface interne (3a) tournée vers l'arbre (2) et dans une position de l'arbre (2) conforme aux prescriptions, la surface interne (3a) est disposée sans contact avec l'arbre (2), **caractérisé en ce qu'**au moins une boucle conductrice (4) est disposée sur la surface interne (3a) et un signal électrique transmis par la boucle conductrice (4), de préférence un courant de repos, est mesuré pour déterminer un sectionnement éventuel de la boucle conductrice (4).

2. Procédé selon la revendication 1, **caractérisé en ce que** le signal électrique est mesuré dans au moins deux boucles conductrices (4) disposées à distance l'une de l'autre dans la direction axiale de l'arbre (2a).

3. Procédé selon la revendication 1 ou 2, **caractérisé en ce que** lors de la détermination du sectionnement d'une boucle conductrice (4) un signal est émis.

4. Dispositif (1) de protection contre les contacts d'un arbre (2) d'un banc d'essai avec une enceinte (3) qui est prévue pour recevoir l'arbre (2) au moins par sections, où l'enceinte (3) est sensiblement fermée dans la direction circonférentielle et présente une surface interne (3a) tournée vers l'arbre (2), qui est conçue pour être disposée sans contact avec l'arbre (2) dans une position de l'arbre (2) conforme aux prescriptions, **caractérisé en ce que** sur la surface interne (3a) au moins une boucle conductrice (4) est disposée, où la boucle conductrice (4) ou chaque boucle conductrice (4) est reliée à un dispositif de mesure (8), qui est conçu pour produire dans chaque cas un signal électrique transmis par la boucle conductrice (4), de préférence un courant de repos, et pour détecter une interruption du signal électrique.

5. Dispositif (1) selon la revendication 4, **caractérisé en ce que** la boucle conductrice (4) est formée dans ou sur une carte flexible (4a).

6. Dispositif (1) selon la revendication 5, **caractérisé en ce que** la carte flexible (4a) présente plusieurs boucles conductrices (4), de préférence exactement deux boucles conductrices (4).

7. Dispositif (1) selon l'une des revendications 4 à 6, **caractérisé en ce que** l'enceinte (3) est constitué d'une demi-coquille supérieure (3c) et d'une demi-coquille inférieure (3b), où de préférence la demi-coquille supérieure (3c) est montée pivotante sur la demi-coquille inférieure (3b).

8. Dispositif (1) selon la revendication 7, **caractérisé en ce qu'**au moins une boucle conductrice (4) est disposée sur la surface interne (3a) de la demi-coquille supérieure (3c) et sur la surface interne (3a) de la demi-coquille inférieure (3b).

9. Dispositif (1) selon l'une des revendications 4 à 8, **caractérisé en ce qu'**au moins deux boucles conductrices (4) disposées de préférence sensiblement diamétralement sont disposées sensiblement à la même hauteur vue dans la direction de l'axe (2a) de l'arbre (2).

10. Dispositif (1) selon l'une des revendications 4 à 9, **caractérisé en ce qu'**au moins deux boucles conductrices (4) sont disposées de telle sorte que la surface interne (3a) est recouverte sensiblement sur toute la circonférence des boucles conductrices (4) dans au moins une section.

11. Dispositif (1) selon l'une des revendications 4 à 10, **caractérisé en ce que**, vu dans la direction de l'axe (2a) de l'arbre (2), une boucle conductrice (4) est disposée de manière adjacente à au moins une extrémité (5) de l'enceinte (3), de préférence aux deux extrémités (5).

12. Dispositif (1) selon l'une des revendications 4 à 11, **caractérisé en ce que** la surface interne (3a) est formée sur un revêtement interne (6) qui est reçu dans une enveloppe externe (7) de l'enceinte (1).
